# EUROPÄISCHE PATENTSCHRIFT

(11) **EP 1 790 120 B1**
(45) Veröffentlichungstag und Bekanntmachung des Hinweises auf die Patenterteilung: **01.08.2012**
(21) Anmeldenummer: 05767999.5
(22) Anmeldetag: 17.06.2005
(51) Int. Cl.: H04L 12/24, H04L 12/56

(54) **VERFAHREN, COMPUTERPROGRAMM MIT PROGRAMMCODE-MITTELN UND COMPUTERPORGRAMMP-RODUKT ZUR ]BERWACHUNG EINES SYSTEMZUSTANDS EINES SYSTEMS MIT VERTEILTEN KOMPONENTEN, INSBESONDERE EINES NETZWERKS MIT VERTEILTEN KOMPONENTEN, NETZWERK MIT VERTEILTEN KOMPONENTEN**
METHOD, COMPUTER PROGRAM COMPRISING PROGRAM CODE ELEMENTS AND COMPUTER PROGRAM FOR MONITORING A SYSTEM CONDITION OF A SYSTEM WITH DISTRIBUTED COMPONENTS, IN PARTICULAR A NETWORK WITH DISTRIBUTED COMPONENTS AND NETWORK WITH DISTRIBUTED COMPONENTS
PROCEDE, PROGRAMME INFORMATIQUE COMPRENANT DES MOYENS DE CODAGE DE PROGRAMME ET PRODUIT DE PROGRAMME INFORMATIQUE POUR SURVEILLER L'ETAT D'UN SYSTEME COMPRENANT DES COMPOSANTES REPARTIES, EN PARTICULIER L'ETAT D'UN RESEAU COMPRENANT DES COMPOSANTES REPARTIES, ET RESEAU A COMPOSANTES REPARTIES

(30) Priorität: 16.09.2004 DE 102004044987
(43) Veröffentlichungstag der Anmeldung: 30.05.2007
(73) Patentinhaber: SIEMENS AKTIENGESELLSCHAFT, 80333 München (DE)
(72) Erfinder: BERNDT, Stefan, 59199 Bönen (DE); HANNA, Thomas, 32758 Detmold (DE); LAUX, Thorsten, 33104 Paderborn (DE); RUSITSCHKA, Steffen, 81543 München (DE); SCHEERING, Christian, 33689 Bielefeld (DE); SOUTHALL, Alan, 81247 München (DE)
(86) Internationale Anmeldenummer: PCT/EP2005/052828
(87) Internationale Veröffentlichungsnummer: WO 2006/029914

(56) Entgegenhaltungen:
- US-A1- 2003 179 742
- US-A1- 2003 204 786
- JAHANIAN F ET AL: "Processor group membership protocols: specification, design and implementation" RELIABLE DISTRIBUTED SYSTEMS, 1993. PROCEEDINGS., 12TH SYMPOSIUM ON PRINCETON, NJ, USA 6-8 OCT. 1993, LOS ALAMITOS, CA, USA,IEEE COMPUT. SOC, 6. Oktober 1993 (1993-10-06), Seiten 2-11, XP010134701 ISBN: 0-8186-4310-2
- FAKHOURI S A ET AL: "Gulfstream - a system for dynamic topology management in multi-domain server farms" 42ND. ANNUAL SYMPOSIUM ON FOUNDATIONS OF COMPUTER SCIENCE.(FOCS 2001). LAS VEGAS, OCT. 14 - 17, 2001, ANNUAL SYMPOSIUM ON FOUNDATIONS OF COMPUTER SCIENCE, LOS ALAMITOS, CA : IEEE COMP. SOC, US, 8. Oktober 2001 (2001-10-08), Seiten 55-62, XP010565139 ISBN: 0-7695-1390-5
- TRIPATHI A ET AL: "Reliable management of distributed computations in Nexus" HIGH PERFORMANCE DISTRIBUTED COMPUTING, 1993., PROCEEDINGS THE 2ND INTERNATIONAL SYMPOSIUM ON SPOKANE, WA, USA 20-23 JULY 1993, LOS ALAMITOS, CA, USA,IEEE COMPUT. SOC, US, 20. Juli 1993 (1993-07-20), Seiten 298-305, XP010032621 ISBN: 0-8186-3900-8

## Beschreibung

Verfahren, Computerprogramm mit Programmcode-Mitteln und Computerprogramm-Produkt zur Überwachung eines Systemzustands eines Systems mit verteilten Komponenten, insbesondere eines Netzwerks mit verteilten Komponenten, Netzwerk mit verteilten Komponenten

Die Anmeldung betrifft eine Überwachung und/oder Überprüfung, kurz im Folgenden allgemein als Überwachung bezeichnet, eines Systemzustands eines Systems mit verteilten Komponenten.

In solchen - kurz - verteilten Systemen, wie beispielsweise mobilen oder stationären Funk- und/oder Kommunikationsnetzen, besteht in der Regel die Notwendigkeit, dass sämtliche Komponenten des verteilten Systems Kenntnis über einen Status bzw. Zustand jeder anderen Komponente im System haben (Überwachung).

Fällt beispielsweise eine Komponente in einem verteilten System aus, beispielsweise dadurch, dass eine Komponente funktionsunfähig und/oder offline ist oder wird, so ist es zweckmäßig, dass jede andere Komponente des Systems diese Information erhält.

Aus dem Stand der Technik sind verschiedene Ansätze zur Überwachung eines Systemzustandes eines verteilten Systems bekannt, bei welchen die Überwachung mittels eines so genannten Ping-Pong-Mechanismus mit so genannten Ping-Pong-Nachrichten realisiert ist.

Hierbei, d.h. bei einem solchen Mechanismus auf Basis von Ping-Pong-Nachrichten, sendet eine System-Komponente einer zu überwachenden Komponente periodisch eine Ping-Nachricht über das verteilte System, auf welche die zu überwachende Komponente mit einer Pong-Antwort, einer so genannten Pong-Acknowledgement, antwortet.

Bleibt die Pong-Antwort einer zu überprüfenden Komponente aus, so wird diese Komponente, in der Regel von der die Ping-Nachricht sendenden Komponente, als offline oder im Allgemeinen als funktionsunfähig klassifiziert.

Damit eine Komponente eines verteilten Systems den Status bzw. Zustand jeder anderen Komponente des verteilten Systems herausfinden bzw. überprüfen kann, fragt sie sämtliche Komponenten mit dem Ping-Pong-Mechanismus ab.

Ein hier bekannter (erster) Ansatz zur Überwachung eines Systemzustandes eines verteilten Systems, basierend auf den Ping-Pong-Mechanismus, sieht vor, dass jede Komponente eines verteilten Systems jede andere Komponente dieses Systems überwacht und dazu entsprechende Informationen über den Status bzw. den Zustand der jeweils anderen Komponenten abfragt.

Hierzu sendet jede Komponente des verteilten Systems jeder anderen Komponente des Systems eine Ping-Nachricht - und erhält bei Funktionsfähigkeit bzw. Online-Zustand der jeweiligen anderen Komponenten entsprechende Pong-Antworten (zurück).

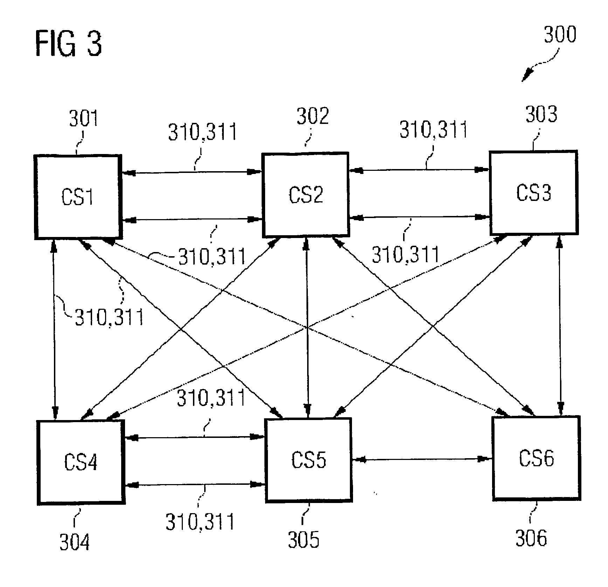

Figur 3 verdeutlicht diesen bekannten ersten Ansatz.

So ist in Figur 3 ein verteiltes Kommunikationssystem 300, ein HiPath-IP-Telephony System 300, mit mehreren, in einem Kommunikationsverbund stehenden Kommunikationsservern 301 bis 306 dargestellt. Jeder dieser Kommunikationsserver 301 bis 306 benötigt das Wissen über den Ausfall eines jeden anderen Kommunikationsservers 301 bis 306 in dem System 300.

Dazu verschickt nun jeder dieser Kommunikationsserver 301 bis 306 jedem anderen Kommunikationsserver 301 bis 306 in dem HiPath-IP-Telephony System 300 eine Ping-Nachricht 310 - und erhält bei Funktionsfähigkeit bzw. Online-Zustand des jeweiligen anderen Kommunikationsserver 301 bis 306 entsprechende Pong-Antworten 311.

Nachteilig an diesem bekannten ersten Ansatz ist, dass hier eine große Nachrichtenmenge, einer Ordnung O(n^2) (n : Anzahl der Systemkomponenten), bei der Überwachung eines Systemzustandes eines verteilten Systems generiert wird, welche eine Leistungsfähigkeit bzw. Kapazität und/oder eine Fehlererkennungsfähigkeit/-schnelligkeit des Systems unter Umständen einschränkt.

So werden beispielsweise bei dem HiPath-IP-Telephony System 300 gemäß Figur 3 alle 60 Sekunden Ping-Pong-Nachrichten (310, 311) verschickt. Dabei entstehen im dargestellten Fall mit den 6 Kommunikationsservern 301 bis 306 bzw. alternativ 30 Servern (6*5*2)/60s= 1 Nachricht pro Sekunde bzw. (30*29*2)/60s= 29 Nachrichten pro Sekunde.

Bei einem weiteren bekannten Ansatz zur Überwachung eines Systemzustandes eines verteilten Systems, basierend auf dem Ping-Pong-Mechanismus, ist vorgesehen, dass hier ein zentraler Koordinator Komponenten eines verteilten Systems überprüft, funktionsunfähige Komponente bzw. ausgefallene Komponenten des verteilten Systems registriert und entsprechende Informationen an sämtliche Komponenten im System propagiert.

Die hier generierte Nachrichtenmenge ist hier der Ordnung O(n).

Nachteilig an diesem weiteren bekannten Ansatz ist, dieser nur schwierig robust realisierbar ist, da der zentrale Koordinator des verteilten Systems redundant gehalten werden muss.

Ferner ist aus Jahanian F et al., "Processor group membership protocols: specification, design and implementation", Reliable Distributed Systems, 1993. Proceedings., 12th Sypmposium on Princeton, NJ, USA 6-8 Oct. 1993, Los Alamitos, CA, USA, IEEE Comput. SOC, 6. Oktober 1993 (1993-10-06), Seiten 2-11 bekannt, Rechenprozessoren zu einer Gruppe zusammenzufassen, um verteilte Rechnungen durchzuführen. Um den Ausfall von beteiligten Prozessoren festzustellen, wird vorgeschlagen, die Prozessoren in einer logischen Ringstruktur zusammenzufassen. Ferner soll jeder Prozessor seinen beiden Nachbarprozessoren im Ring regelmäßig sogenannte Heartbeat-Nachrichten übermitteln. Anhand der Anzahl von nicht-empfangenen Heartbeat-Nachrichten soll ein Ausfall oder Fehler eines Prozessors ermittelt werden.

Fakhouri S. A. et al., "Gulfstream - a system for dynamic topology management in multi-domain server farms", 42nd. annual symposium on foundations of computer science; (FOCS 2001), Las Vegas, Oct.14-17, 2001, Annual symposium on foundations of computer science, Los Alamitos, CA, IEEE Comp. SOC, US, 8. Oktober 2001 (2001-10-08), Seiten 55-62 beschreibt ein Verfahren für eine Serverfarm, wobei Netzwerkadapter in einer Gruppe zusammengefasst werden, die einen logischen Ring bilden. Um die Funktionsfähigkeit der Netzwerkadapter zu überwachen, wird vorgeschlagen, regelmäßige Heartbeat-Nachrichten an einen Folgenetzwerkadapter im logischen Ring zu senden. Die Überwachung erfolgt durch eine jeder Gruppe zugeordneten zentralen Einrichtung, die im Falle des Ausbleibens von Heartbeat-Nachrichten von den jeweiligen Empfängernetzwerkadaptern eine Ausfallnachricht erhält. Die zentrale Netzwerkeinrichtung für die jeweilige Gruppe führt dann entsprechende Maßnahmen aus. In demselben Dokument ist ferner ausgeführt, dass vorzugsweise die Netzwerkadapter Heartbeat-Nachrichten an mehrere andere Netzwerkadapter senden sollen.

Die US 2003/0204786 A1 offenbart ein Verfahren und ein System zum Betreiben von Clustern aus Knoten eines verteilten Rechensystems. Es wird dabei vorgeschlagen, die Knoten in einer logischen Ringstruktur vorzusehen, wobei die benachbarten Knoten eines jeweiligen Rechenknotens Hartbeat-Nachrichten versenden. Werden keine Nachrichten von den direkten Nachbarn erhalten, sendet der jeweilige Clusterknoten eine Ausfallnachricht an den nächsten funktionsfähigen Nachbarn im Ring.

Die Aufgabe der vorliegenden Erfindung besteht deshalb darin, ein Verfahren anzugeben, welches eine Überwachung eines Systemzustandes eines verteilten Systems vereinfacht und/oder mit einem geringeren Aufwand realisiert bzw. ermöglicht.

Diese Aufgabe wird durch das Verfahren, durch das Computerprogramm mit Programmcode-Mitteln und durch das Computerprogramm-Produkt zur Überwachung eines Systemzustands eines Systems mit verteilten Komponenten sowie durch das Netzwerk mit verteilten Komponenten mit den Merkmalen gemäß dem jeweiligen unabhängigen Patentanspruch gelöst.

Bei dem Verfahren zur Überwachung eines Systemzustands eines Systems mit verteilten Komponenten werden bzw. sind die verteilten Komponenten des Systems in einer logischen Ringstruktur angeordnet.

Unter einer "logischen" Ringstruktur (von Systemkomponenten) ist dabei ohne Beschränkung der Allgemeinheit zu verstehen, dass in der Regel keine physikalisch, gegenständliche Strukturierung der Systemkomponenten in eine Ringstruktur erfolgt, sondern dass diese gedanklich, d.h. als Gedankenmodell, virtuell in einer Ringstruktur angeordnet bzw. derart strukturiert werden.

Jede Komponente des Systems überwacht nur ihre jeweilige Nachbarkomponente in der logischen Ringstruktur, wobei ein Zustand der jeweiligen Nachbarkomponente festgestellt wird.

Stellt eine Komponente einen Zustand ihrer Nachbarkomponente fest, welcher Zustand einem vorgebbaren Zustand entspricht, so informiert sie die sonstigen Komponenten des Systems über den festgestellten, vorgegebenen Zustand ihrer Nachbarkomponente.

Ein Vorteil des erfindungsgemäßen Verfahrens besteht darin, dass es Vorteile der obig beschriebenen, aus dem Stand der Technik bekannten Ansätze kombiniert.

Es werden erfindungsgemäß nur Nachrichten der Ordnung O(n) benötigt, um den Status bzw. den zustand sämtlicher (verteilten) Komponenten im verteilten System zu überwachen. Es existiert dabei aber keine zentrale Instanz, der zentrale Koordinator, die robust gehalten werden muss.

So basiert der erfindungsgemäße Ansatz anschaulich auf einer logischen Ringstruktur in der die Komponenten des verteilten Systems angeordnet sind bzw. werden.

Jede Komponente des Systems überwacht hierbei nur ihren jeweiligen Nachbarn, d.h. ihre jeweilige Nachbarkomponente, im Ring. Beim Ausfall, wie bei einer Funktionsunfähigkeit und/oder eines Offline-Zustands, des Nachbarn setzt die Komponente alle anderen Komponenten darüber in' Kenntnis.

Bei dem Netzwerk mit verteilten Komponenten sind die verteilten Komponenten in einer logischen Ringstruktur angeordnet. Die in der Ringstruktur angeordneten Komponenten sind derart eingerichtet, dass
- eine Komponente nur ihre jeweilige Nachbarkomponente in der logischen Ringstruktur überwacht, wobei ein Zustand der jeweiligen Nachbarkomponente feststellbar ist, und
- eine Komponente, die einen Zustand ihrer Nachbarkomponente, welcher Zustand einem vorgebbaren Zustand entspricht, festgestellt hat, die sonstigen Komponenten des Systems über den festgestellten, vorgegebenen Zustand ihrer Nachbarkomponente informiert.

Das Computerprogramm mit Programmcode-Mitteln ist eingerichtet, um alle Schritte gemäß dem erfindungsgemäßen Verfahren durchzuführen, wenn das Programm auf einem Computer ausgeführt wird.

Das Computerprogramm-Produkt mit auf einem maschinenlesbaren Träger gespeicherten Programmcode-Mitteln ist eingerichtet, um alle Schritte gemäß dem erfindungsgemäßen Verfahren durchzuführen, wenn das Programm auf einem Computer ausgeführt wird.

Die Einrichtung sowie das Computerprogramm mit Programmcode-Mitteln, eingerichtet um alle Schritte gemäß dem erfinderischen Verfahren durchzuführen, wenn das Programm auf einem Computer ausgeführt wird, sowie das Computerprogramm-Produkt mit auf einem maschinenlesbaren Träger gespeicherten Programmcode-Mitteln, eingerichtet um alle Schritte gemäß dem erfinderischen Verfahren durchzuführen, wenn das Programm auf einem Computer ausgeführt wird, sind insbesondere geeignet zur Durchführung des erfindungsgemäßen Verfahrens oder einer seiner nachfolgend erläuterten Weiterbildungen.

Bevorzugte Weiterbildungen der Erfindung ergeben sich aus den abhängigen Ansprüchen.

Die im weiteren beschriebenen Weiterbildungen beziehen sich sowohl auf die Verfahren als auch auf das Netzwerk.

Die Erfindung und die im weiteren beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer im weiteren beschriebenen Weiterbildung möglich durch ein computerlesbares Speichermedium, auf welchem das Computerprogramm mit Programmcode-Mitteln gespeichert ist, welches die Erfindung oder Weiterbildung ausführt.

Auch kann die Erfindung oder jede im weiteren beschriebene Weiterbildung durch ein Computerprogrammerzeugnis realisiert sein, welches ein Speichermedium aufweist, auf welchem das Computerprogramm mit Programmcode-Mitteln gespeichert ist, welches die Erfindung oder Weiterbildung ausführt.

In einer bevorzugten Weiterbildung ist vorgesehen dass der vorgebbare Zustand eine Funktionsunfähigkeit, insbesondere ein Offline-Zustand, oder eine Funktionsfähigkeit, insbesondere ein Online-Zustand, ist. Für die Funktionsfähigkeit hat sich in der Fachwelt der Begriff "Alive" (lebend) eingebürgert.

Die Überwachung der jeweiligen Nachbarkomponente und/oder die Feststellung des Zustands einer Komponente kann bevorzugt unter Verwendung eines Verfahrens auf Basis eines Leasing-Verfahrens durchgeführt werden.

Dabei, d.h. bei dem erfindungsgemäß angewandten Verfahren auf Basis eines Leih-Verfahrens (Leasing-Verfahrens), kann bzw. wird eine "Alive"-Information, insbesondere eine "Alive"-Nachricht, von der Nachbarkomponente an die Komponente übermittelt werden bzw. übermittelt.

Hier kann es, insbesondere in Hinblick auf aktuelle Informationen über einen Systemzustand, zweckmäßig sein, die "Alive"-Information periodisch zu übermitteln.

Basierend auf solche, gegebenenfalls, nicht aber notwendigerweise, periodische "Alive"-Informationen kann dann eine Funktionsunfähigkeit der Nachbarkomponente festgestellt werden, wenn die Nachbarkomponente keine "Alive"-Information (mehr) übermittelt. Anschaulich gesehen kann dies bedeuten, dass - im Gegenzug - solange "Alive"-Informationen übermittelt werden, von einem "Online"-Zustand der jeweiligen Komponente ausgegangen wird.

Weiter ist es zweckmäßig, dass die Information der sonstigen Komponenten über den vorgebbaren Zustand einer Nachbarkomponente, unter Verwendung eines Verfahrens auf Basis eines "Alle-Informieren"-Verfahrens durchgeführt wird.

Hier, d.h. bei dem erfindungsgemäß angewandtem Verfahren auf Basis eines "Alle-Informieren"-Verfahrens, wird für jede sonstige Komponente im System ein Bestätigungsverfahren durchgeführt, bei dem die jeweilige sonstige Komponente, wenn sie die Information über den vorgebbaren Zustand einer Nachbarkomponente erhalten hat, den Erhalt der Information, insbesondere unter Verwendung einer "Acknowledgement"-Information, im speziellen einer "Acknowledgement"-Nachricht, bestätigt. Für "Bestätigung" hat sich in der Fachwelt der Begriff "Acknowledgement" eingebürgert.

Die Bestätigung (des Erhalts der Information) erfolgt dabei in der Regel gegenüber der Komponente, die den vorgebbaren Zustand der Nachbarkomponente festgestellt hat, insbesondere dadurch, dass eine "Acknowledgement"-Nachricht an die Komponente übermittelt wird.

Weiter kann vorgesehen sein bzw. werden, dass für eine sonstige Komponente, welche den Erhalt der Information über den festgestellten, bestimmten Zustand der Nachbarkomponente nicht bestätigt, auch der vorgebbare Zustand festgestellt wird.

Auch hier können wieder alle übrigen Komponenten über diese Information in Kenntnis gesetzt werden. Dieses kann mit oder auch ohne entsprechendem Bestätigungsverfahren erfolgen.

In einer weiteren bevorzugten Ausgestaltung ist vorgesehen dass jede Komponente Informationen über die Zustände der übrigen Komponenten, insbesondere in einer lokalen Liste, speichert. Jede Komponente hat dadurch (stets) ein lokales Wissen über eine globalen Status bzw. Zustand des verteilten Systems.

Mit Hilfe dieses Wissens können dann gezielt "Leih"-Nachrichten versendet werden und/oder die Ringstruktur in einem "geschlossenen" Zustand gehalten werden.

Weiter kann die Nachbarkomponente zu einer Komponente in der Ringstruktur eine Vorgänger-Komponente oder auch eine Nachfolger-Komponente in der logischen Ringstruktur sein.

In einer weiteren bevorzugten Ausgestaltung ist vorgesehen, ein Kommunikationsnetz, insbesondere ein stationäres Kommunikationsnetz, wie beispielsweise ein Telefonfestnetz, mit verteilten Komponenten zu überwachen. In diesem Fall sind die Komponenten in der Regel Kommunikationsserver.

Die erfindungsgemäße Überwachung kann aber entsprechend auch bei mobilen, verteilten Systemen, wie Mobilfunknetze, durchgeführt werden.

Weitere Vorteile, Merkmale und Einzelheiten der Erfindung werden nachfolgend anhand von einem Ausführungsbeispiel und zu dem Ausführungsbeispiel zugehörigen Figuren näher beschrieben. Es zeigen:
- Figur 1: ein verteiltes System mit in einer logischen Ringstruktur angeordneten (verteilten) Komponenten, bei welchem jede Komponente nur ihren jeweiligen Nachbarn in dem Ring überwacht, gemäß einem Ausführungsbeispiel;
- Figur 2: ein verteiltes System mit in einer logischen Ringstruktur angeordneten (verteilten) Komponenten, bei welchem jede Komponente nur ihren jeweiligen Nachbarn in dem Ring überwacht, mit einem Ausfall einer Komponente gemäß einem Ausführungsbeispiel;
- Figur 3: ein verteiltes System mit (verteilten) Komponenten, bei welchem jede Komponente jede andere Komponente des Systems überwacht, gemäß dem Stand der Technik.

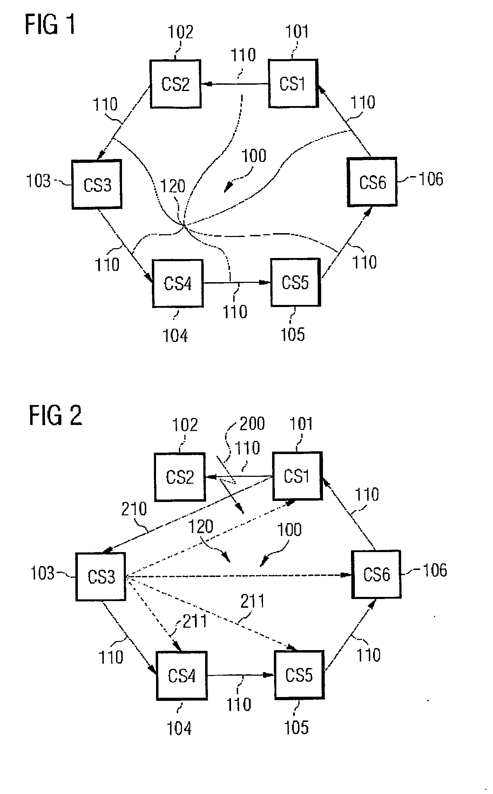

Figur 1 und Figur 2 zeigen ein verteiltes Kommunikationssystem 100, ein erfindungsgemäß weiterentwickeltes HiPath-IP-Telephony System 100, mit mehreren, in einem Kommunikationsverbund stehenden Kommunikationsservern 101 bis 106, kurz im folgenden auch "Komponenten" 101 bis 106.

Jeder dieser Kommunikationsserver 101 bis 106 benötigt das Wissen über einen Ausfall (vgl. Figur 2) eines jeden anderen Kommunikationsserver 101 bis 106 in dem System 100, was durch nachfolgend beschriebenen Überwachungsmechanismus realisiert ist.

Dazu werden die Kommunikationsserver 101 bis 106 des erfindungsgemäß weiterentwickelten HiPath-IP-Telephony Systems 100 in einer logischen Ringstruktur 120 angeordnet (102 folgt 103, 101 folgt 102, 106 folgt 101, 105 folgt 106, 104 folgt 105, 103 folgt 104).

Jeder Kommunikationsserver 101 bis 106 überwacht 110 dann hier nur seinen jeweiligen Nachfolger in der Ringstruktur 120 (102 überwacht Nachfolger 101; 103 überwacht Nachfolger 102; ...).

Beim Ausfall 200 eines Nachfolgers (vgl. Fig.2, 102 bei Ausfall 200) setzt der jeweilige (im Ring 120 voranstehende) Kommunikationsserver (vgl. Figur 2, 103) alle anderen Kommunikationsserver darüber in Kenntnis (vgl. Fig.2, 211).

Die Überwachung 110 eines in der Ringstruktur 120 nachfolgenden Kommunikationsservers 101 bis 106 geschieht hier, d.h. bei dem erfindungsgemäß weiterentwickelten HiPath-IP-Telephony System 100, über ein "Leih"-Verfahren.

Dabei schickt ein Nachfolger, beispielsweise Komponente 102, periodisch eine so genannte "Alive"-Nachricht 110 an den jeweiligen in Ring voranstehenden Kommunikationsserver, beispielsgemäß Komponente 103.

Bleibt bei einem Kommunikationsserver (103 in Figur 2) diese "Alive"-Nachricht 110 von seinem Nachfolger (102 in Figur 2) aus (die "Ausleihe" läuft aus), wird der Nachfolger (102 in Figur 2) als "Offline" eingestuft.

Der diesen "Offline"-Kommunikationsserver 102 überwachende Kommunikationsserver 103 setzt daraufhin mittels entsprechender Informations-Nachrichten 211 jeden anderen Kommunikationsserver 101, 104 bis 106 im System 100 darüber, d.h. über den Ausfall 200 seines Nachfolgers 102, in Kenntnis.

Jeder andere Kommunikationsserver 101, 104 bis 106 im System 100 muss den Erhalt der Information durch eine "Acknowledgement"-Nachricht bestätigen.

Bleibt diese Bestätigung von einem der anderen Komponenten 101, 104 bis 106 aus, so wird auch dieser Kommunikationsserver als "Offline" eingestuft.

Wiederum werden alle Kommunikationsserver von dem Kommunikationsserver 103 über diesen weiteren Ausfall in Kenntnis gesetzt.

In dieser Stufe erwartet der Kommunikationsserver 103 jedoch keine Bestätigung mehr.

Dieser Mechanismus wird "Alle-Informieren" ("Inform All") genannt.

Jede Komponente 101 bis 106 speichert ihr Wissen über den Status anderer Komponenten 101 bis 106 im System 100 in einer lokalen Liste ab. Jede Komponente 101 bis 106 hat dadurch stets ein lokales Wissen über den globalen Status des Systems 100.

Mit Hilfe dieses Wissens schickt jede Komponente 101 bis 106 eine "Leih"-Nachricht an den nächsten ihr bekannten "Online"-Vorgänger. Dadurch wird garantiert, dass der Ring 120 stets in einem geschlossenen Zustand ist.

Gleichzeitig schickt jede Komponente 101 bis 106 eine "Leih"-Nachricht an sämtliche "Offline"-Vorgänger, die sich im Ring zwischen dem nächsten bekannten "Online"-Vorgänger und ihr selbst befinden.

Mit diesem Verfahren ist garantiert, dass Komponenten 101 bis 106, die wieder "Online" werden, in den Ring 120 reintegriert werden.
Erkennt eine Komponente 101 bis 106 durch den Erhalt einer Lease-Nachricht, dass eine andere Komponente wieder "Online" ist, so informiert sie alle anderen Komponenten 101 bis 106 mit dem "Alle-Informieren"-Mechanismus.

Berücksichtigt man, dass bei obigem aus dem Stand der Technik bekannten System bzw. dessen Überwachungsmechanismus (vgl. Figur 3) 29 Nachrichten pro Sekunde notwendig waren bzw. versendet wurden, so kann ausführungsgemäß - bei gleicher Anzahl von Nachrichten pro Sekunde - ein Monitoring in etwa einmal pro Sekunde geschehen (30/29 Nachrichten pro Sekunde).

Dadurch kann ein System mit 30 Servern bei gleicher Netzwerklast 60mal schneller überwacht werden und einen Fehler erkennen. Je mehr Server ein System enthält, umso besser verhält sich dieser Faktor.

## Patentansprüche

1. Verfahren zur Überwachung eines Systemzustands eines Systems mit verteilten Komponenten (101-106), insbesondere eines Netzwerks (100) mit verteilten Komponenten, bei dem
- die verteilten Komponenten (101-106) des Systems in einer logischen Ringstruktur (120) angeordnet werden,
- jede Komponente (101-106) des Systems nur ihre jeweilige Nachbarkomponente in der logischen Ringstruktur (120) überwacht, wobei ein Zustand der jeweiligen Nachbarkomponente festgestellt wird,
**dadurch gekennzeichnet, dass**
eine Komponente (103), die einen Zustand ihrer Nachbarkomponente (102), welcher Zustand einem vorgebbaren Zustand entspricht, festgestellt hat, alle anderen Komponenten (101, 104-106) des Systems über den festgestellten, vorgegebenen Zustand ihrer Nachbarkomponente (211) informiert.

2. Verfahren nach Anspruch 1,
wobei der vorgebbare Zustand eine Funktionsunfähigkeit, insbesondere ein Offline-Zustand, oder eine Funktionsfähigkeit, insbesondere ein Online-Zustand, ist.

3. Verfahren nach Anspruch 1 oder 2,
wobei eine "Alive"-Information, insbesondere eine "Alive"-Nachricht (110), von der Nachbarkomponente (102) an die Komponente (103) übermittelt wird.

4. Verfahren nach Anspruch 3,
wobei die "Alive"-Information periodisch übermittelt wird.

5. Verfahren nach Anspruch 3 oder 4,
wobei eine Funktionsunfähigkeit der Nachbarkomponente (102) dann festgestellt wird, wenn die Nachbarkomponente (102) keine "Alive"-Information übermittelt.

6. Verfahren nach einem der vorhergehenden Ansprüche,
wobei das Informieren aller anderen Komponenten (101, 104-106) über den vorgebbaren Zustand der Nachbarkomponente (102), auf Basis eines "Alle-Informieren"-Verfahrens durchgeführt wird.

7. Verfahren nach einem der vohergehenden Ansprüche,
wobei auf Basis eines "Alle-Informieren"-Verfahrens für jede der anderen Komponenten (101, 104-106) ein Bestätigungsverfahren durchgeführt wird, bei dem die jeweilige andere Komponente (101, 104-106), wenn sie die Information über den vorgebbaren Zustand einer Nachbarkomponente (102) erhalten hat, den Erhalt der Information, insbesondere unter Verwendung einer "Acknowledgement"-Information, insbesondere einer "Acknowledgement"-Nachricht, bestätigt.

8. Verfahren nach Anspruch 7,
wobei die Bestätigung gegenüber der Komponente (103) erfolgt, die den vorgebbaren Zustand der Nachbarkomponente (102) festgestellt hat, insbesondere dadurch, dass eine "Acknowledgement"-Nachricht an die Komponente (103) übermittelt wird.

9. Verfahren nach Anspruch 7 oder 8,
wobei für eine andere Komponente (101, 104-106), welche den Erhalt der Information über den festgestellten, bestimmten Zustand der Nachbarkomponente (102) nicht bestätigt, auch der vorgebbare Zustand festgestellt wird.

10. Verfahren nach einem der vorhergehenden Ansprüche,
wobei jede Komponente (101-106) Informationen über die Zustände der übrigen Komponenten, insbesondere in einer lokalen Liste, speichert.

11. Verfahren nach einem der vorhergehenden Ansprüche,
wobei die Nachbarkomponente (103) entweder eine Vorgänger-Komponente oder eine Nachfolger-Komponente einer Komponente (103) in der logischen Ringstruktur ist.

12. Verfahren nach einem der vorangehenden Ansprüche,
wobei ein Kommunikationsnetz (100), insbesondere ein stationäres Kommunikations- und/oder Telefonnetz mit verteilten Komponenten (101-106) überwacht wird, wobei die Komponenten (101-106) Kommunikationsserver sind.

13. Computerprogramm mit Programmcode-Mitteln, um alle Schritte nach einem der vorhergehenden Ansprüche durchzuführen, wenn das Programm auf einer Netzwerkkomponente ausgeführt wird.

14. Computerprogramm mit Programmcode-Mitteln gemäß Anspruch 13, wobei das Computerprogramm auf einem computerlesbaren Datenträger gespeichert ist.

15. Computerprogramm-Produkt mit auf einem maschinenlesbaren Träger gespeicherten Programmcode-Mitteln, um alle Schritte nach einem der Ansprüche 1-12 durchzuführen, wenn das Programm auf einer Netzwerkkomponente ausgeführt wird.

16. Netzwerk (100) mit in einer logischen Ringstruktur (120) angeordneten verteilten Komponenten (101-106), wobei jede Komponente (101-106) derart eingerichtet ist, dass eine Komponente (103) nur ihre jeweilige Nachbarkomponente (102) in der logischen Ringstruktur (120) überwacht, wobei ein Zustand der jeweiligen Nachbarkomponente (102) feststellbar ist, **dadurch gekennzeichnet, dass**
eine Komponente (103), die einen Zustand ihrer Nachbarkomponente (102), welcher Zustand einem vorgebbaren Zustand entspricht, festgestellt hat, alle anderen Komponenten (101, 104-106) des Systems über den festgestellten, vorgegebenen Zustand ihrer Nachbarkomponente (102) informiert.

## Claims

1. Method for monitoring a system condition of a system with distributed components (101-106), in particular of a network (100) with distributed components, in which
- the distributed components (101-106) of the system are arranged in a logical ring structure (120),
- each component (101-106) of the system monitors only its respective neighbouring component in the logical ring structure (120), whereby a condition of the respective neighbouring component is determined,
**characterised in that**
a component (103) which has determined a condition of its neighbouring component (102), which condition corresponds to a predefinable condition, informs all other components (101, 104-106) of the system about the determined, predefined condition of its neighbouring component (211).

2. Method according to claim 1,
in which the predefinable condition is a functional incapacity, in particular an offline condition, or a functional capacity, in particular an online condition.

3. Method according to claim 1 or 2,
in which "Alive" information, particularly an "Alive" message (110), is sent from the neighbouring component (102) to the component (103).

4. Method according to claim 3,
in which the "Alive" information is sent periodically.

5. Method according to claim 3 or 4,
in which a functional incapacity of the neighbouring component (102) is determined if the neighbouring component (102) does not send any "Alive" information.

6. Method according to one of the preceding claims,
in which the process of informing all other components (101, 104-106) about the predefinable condition of the neighbouring component (102) is carried out on the basis of an "Inform All" method.

7. Method according to one of the preceding claims,
in which on the basis of an "Inform All" method an acknowledgement process is performed for each of the other components (101, 104-106), in which the respective other component (101, 104-106), if it has received the information about the predefinable condition of a neighbouring component (102), confirms the receipt of the information, in particular by using "Acknowledgement" information, specifically an "Acknowledgement" message.

8. Method according to claim 7,
in which the acknowledgement occurs with respect to the component (103) which has determined the predefinable condition of the neighbouring component (102), in particular in that an "Acknowledgement" message is sent to the component (103).

9. Method according to claim 7 or 8,
in which the predefinable condition is also determined for another component (101, 104-106) which does not acknowledge the receipt of the information about the determined, defined condition of the neighbouring component (102).

10. Method according to one of the preceding claims,
in which each component (101-106) stores information about the conditions of the other components, in particular in a local list.

11. Method according to one of the preceding claims,
in which the neighbouring component (103) is either a predecessor component or a successor component of a component (103) in the logical ring structure.

12. Method according to one of the preceding claims,
in which a communication network (100), in particular a stationary communication and/or telephone network with distributed components (101-106), is monitored, whereby the components (101-106) are communication servers.

13. Computer program with program code elements for performing all steps according to one of the preceding claims when the program is executed on a network component.

14. Computer program with program code elements according to claim 13, in which the computer program is stored on a computer-readable data medium.

15. Computer program product with program code elements stored on a machine-readable medium for performing all steps according to one of claims 1-12 when the program is executed on a network component.

16. Network (100) with distributed components (101-106) arranged in a logical ring structure (120), in which each component (101-106) is set up such that a component (103) monitors only its respective neighbouring component (102) in the logical ring structure (120), whereby a condition of the respective neighbouring component (102) can be determined, **characterised in that**
a component (103) which has determined a condition of its neighbouring component (102), which condition corresponds to a predefinable condition, informs all other components (101, 104-106) of the system about the determined, predefined condition of its neighbouring component (102).

## Revendications

1. Procédé de surveillance d'un état d'un système avec des composants distribués (101-106), et plus particulièrement d'un réseau (100) avec des composants distribués, dans lequel :
- les composants distribués (101-106) du système sont agencés selon une structure annulaire logique (120) ;
- chaque composant (101-106) du système surveille uniquement son composant voisin respectif dans la structure annulaire logique (120), un état du composant voisin logique respectif étant constaté,
**caractérisé en ce qu'**un composant (103) qui a constaté un état de son composant voisin (102) correspondant à un état prédéterminable informe tous les autres composants (101, 104-106) du système sur l'état prédéterminé constaté de son composant voisin (102).

2. Procédé selon la revendication 1, l'état prédéterminable étant une inaptitude fonctionnelle, et plus particulièrement un état hors ligne, ou une aptitude fonctionnelle, et plus particulièrement un état en ligne.

3. Procédé selon la revendication 1 ou 2, une information « alive », et plus particulièrement un message « alive » (110), étant transmise du composant voisin (102) au composant (103).

4. Procédé selon la revendication 3, l'information « alive » étant transmise périodiquement.

5. Procédé selon la revendication 3 ou 4, une inaptitude fonctionnelle du composant voisin (102) étant constatée lorsque le composant voisin (102) ne transmet pas d'information « alive ».

6. Procédé selon l'une des revendications précédentes, l'information de tous les autres composants (101, 104-106) relative à l'état prédéterminable du composant voisin (102) étant effectuée sur la base d'un procédé « informer tous ».

7. Procédé selon l'une des revendications précédentes, pour chacun des autres composants (101, 104-106) étant exécuté, sur la base d'un procédé « informer tous », un procédé de confirmation dans lequel l'autre composant respectif (101, 104-106), lorsqu'il a reçu l'information relative à l'état prédéterminable d'un composant voisin (102), confirme la réception de l'information, notamment en utilisant une information « Acknowledgement », et plus particulièrement un message « Acknowledgement ».

8. Procédé selon la revendication 7, la confirmation étant effectuée à l'adresse du composant (103) qui a constaté l'état prédéterminable du composant voisin (102) en particulier par la transmission d'un message « Acknowledgement » au composant (103).

9. Procédé selon la revendication 7 ou 8, l'état prédéterminable étant également constaté pour un autre composant (101, 104-106) qui ne confirme pas la réception de l'information relative à l'état déterminé constaté du composant voisin (102).

10. Procédé selon l'une des revendications précédentes, chaque composant (101-106) stockant, en particulier dans une liste locale, des informations relatives aux états des autres composants.

11. Procédé selon l'une des revendications précédentes, le composant voisin (103) étant soit un composant précédent soit un composant suivant d'un composant (103) dans la structure annulaire logique.

12. Procédé selon l'une des revendications précédentes, un réseau de communication (100), et plus particulièrement un réseau de communication et/ou téléphonique fixe avec des composants distribués (101-106), étant surveillé, les composants (101-106) étant des serveurs de communication.

13. Programme informatique comportant des moyens de codage de programme pour exécuter toutes les étapes selon l'une des revendications précédentes lorsque le programme est exécuté sur un composant réseau.

14. Programme informatique comportant des moyens de codage de programme selon la revendication 13, le programme informatique étant stocké sur un support de données lisible par ordinateur.

15. Produit de programme informatique comportant des moyens de codage de programme stockés sur un support lisible par machine pour exécuter toutes les étapes selon l'une des revendications 1 à 12 lorsque le programme est exécuté sur un composant réseau.

16. Réseau (100) avec des composants distribués (101-106) qui sont agencés selon une structure annulaire logique (120), chaque composant (101-106) étant configuré de manière telle qu'un composant (103) surveille uniquement son composant voisin respectif (102) dans la structure annulaire logique (120), un état du composant voisin respectif (102) pouvant être constaté, **caractérisé en ce qu'**un composant (103) qui a constaté un état de son composant voisin (102) correspondant à un état prédéterminable informe tous les autres composants (101, 104-106) du système sur l'état prédéterminé constaté de son composant voisin (102).
